# EUROPEAN PATENT SPECIFICATION

(11) **EP 0 532 903 B1**
(45) Date of publication and mention of the grant of the patent: **21.06.1995**
(21) Application number: 92113664.4
(22) Date of filing: 11.08.1992
(51) Int. Cl.: B29B 7/42

(54) **A continuous kneading apparatus**
Kontinuierliches Knetapparat
Appareil continu de pétrissage

(30) Priority: 16.08.1991 JP 205823/91
(43) Date of publication of application: 24.03.1993
(73) Proprietor: B.H. KOGYO YUGEN KAISHA, Osaka-shi, Osaka-fu (JP)
(72) Inventor: Yamaoka, Kishihiro, Nara-shi, Nara-ken (JP)
(74) Representative: Rau, Manfred, Dr. Dipl.-Ing.

(56) References cited:
- FR-A- 1 143 079
- US-A- 4 067 553
- US-A- 4 408 887

## Description

### BACKGROUND OF THE INVENTION AND RELATED ART STATEMENT

This invention relates to a continuous kneading apparatus capable of effectively kneading a variety of viscous material and having a small construction and, particularly to a continuous kneading apparatus in which material being kneaded is unlikely to remain.

Conventionally, there have been known continuous kneading apparatus having the following construction. A feed section, a kneading section, and a kneading section are formed such that viscous material (hereinafter merely referred to as material) fed through a supply port into a hollow cylinder provided with a rotatable screw shaft therein is continuously kneaded while being fed according to rotation of the screw shaft, and then extruded. Further, there has been disclosed a continuous kneading apparatus having a small construction, and yet capable of carrying out sufficient kneading. Such a continuous kneading apparatus is disclosed in, for example, Examined Japanese Patent Publication No. 2-92. In this apparatus, fixed doughnut members mounted on a cylinder and rotatable discs mounted on a rotatable shaft are alternately opposed to each other, and projected portions and recessed portions extending in radial directions are formed on opposing side faces of the rotatable discs and fixed doughnut members. With this arrangement, the shear force is applied to the material while the material is moving between the rotatable discs and fixed doughnut members.

In this case, a screw flight is mounted on the rotatable shaft between two adjacent rotatable discs and extends helically in the shaft direction, in order to permit smooth movement of the material.

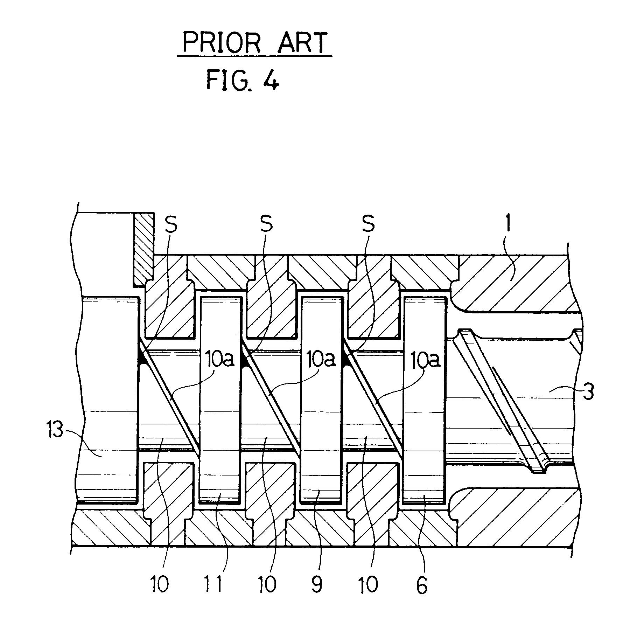

Fig. 4 is a fragmentary side view in section showing a mounted state of a screw flight 10a in a kneading apparatus of prior art. As shown in this figure, the screw flight 10a extends from an outlet-facing side face of the rotatable disc 6 helically and reaches an inlet-facing side face of the rotatable disc 9 located more downstream of the disc 6.

However, the screw flights outstretch continuously over ranges between two adjacent rotatable discs, specifically between the rotatable discs 6 and 9, between the rotatable discs 9 and 11, and between the rotatable discs 11 and 13, the discs 6, 9, 11, and 13 all mounted on a rotatable shaft 10. A downstream end of each screw flight 10a and its corresponding more downstream located rotatable disc of the two adjacent ones are in contact with each other, thereby defining an acute corner section. Accordingly, the screw flights 10a are rotated according to rotation of the rotatable shaft, thereby moving the material present between the two adjacent rotatable discs. However, a portion of the material which has reached the downstream located rotatable discs is trapped in the acute corner section to form an accumulated mass S therein.

Once trapped in the acute corner section, the material is strongly pressed by incoming material successively moved. Consequently, the trapped material becomes incapable of getting out of the acute corner section and the accumulated mass S itself grows bigger and bigger. The grown mass S obstructs smooth movement of the material. When the mass S gets out of the acute corner section, it results in mixing old material into new material being kneaded. This situation adversely affects the quality of kneaded products.

It is an object of the invention to overcome the above problems residing in the prior art and to provide a continuous kneading apparatus constructed such that material being kneaded therein is not trapped in an acute corner section defined by a rotatable disc and a screw flight.

### SUMMARY OF THE INVENTION

Accordingly, the invention is directed to a kneading apparatus with the features of claim 1. Preferably the plurality of rotatable discs and fixed members each have projected portions and recessed portions formed on opposite side faces thereof, the projected portions and recessed portions extending radially and arranged alternately circumferentially. Further, the rotatable discs and fixed members are preferably arranged alternately in the extending direction of the rotatable shaft so that side faces of the rotatable discs are opposed to the corresponding side faces of the fixed members.

With the kneading apparatus thus constructed, the notch portion formed at the downstream end of each screw flight serves as a passage for material in an acute corner section defined by the more downstream located rotatable discs of the two adjacent ones and the screw flight. Accordingly, the kneading apparatus is free from the following problems residing in the existing kneading apparatus: 1) material being fed is trapped in the acute corner section to form an accumulated mass therein; and 2) old material which has been trapped in the acute corner section in the form of the accumulated mass is mixed into material being fed.

These and other objects, features and advantages of the present invention will become more apparent upon a reading of the following detailed description and accompanying drawings.

### BRIEF DESCRIPTION OF THE DRAWINGS

Fig. 1 is a vertical sectional view showing a kneading apparatus embodying the invention;
Fig. 2 is a fragmentary sectional view showing enlargedly an essential portion of the kneading apparatus;
Fig. 3A is a perspective view showing a rotatable shaft mounted with a rotatable disc;
Fig. 3B is a perspective view showing a fixed member; and
Fig. 4 is a fragmentary sectional view showing an essential portion of a kneading apparatus of prior art.

### DETAILED DESCRIPTION OF PREFERRED EMBODIMENTS OF THE INVENTION

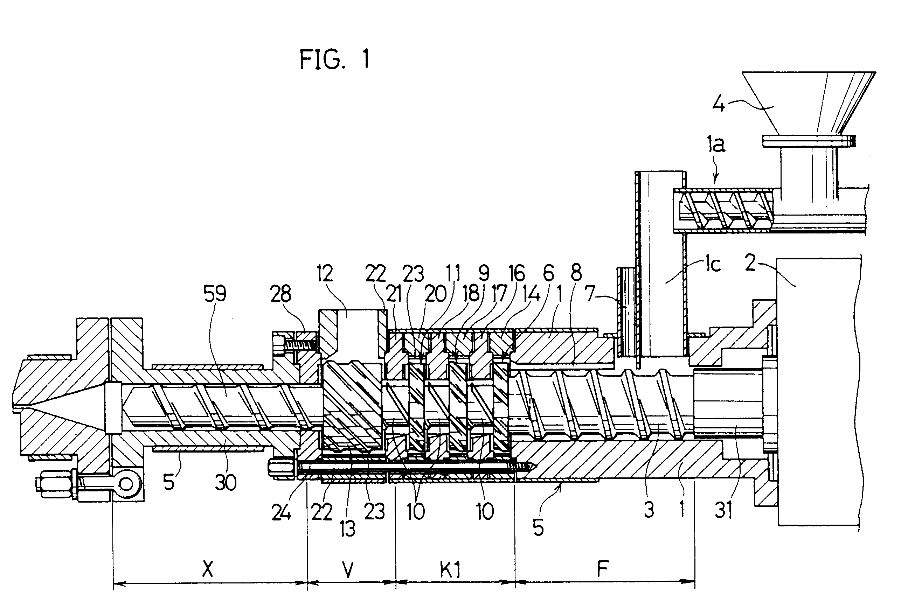

In Fig. 1, indicated at 1 is a hollow cylinder. To the hollow cylinder 1 is connected a hopper 4 by way of a supply port 1c and a quantity measuring feeder 1a connected to the port 1c. In the hollow cylinder 1 is inserted a rotatable shaft 31 which is rotated by a driving device 2. A screw 3 is mounted on the rotatable shaft 31 coaxially therewith, thereby forming a feed section F. At a leading end of the screw 3 is mounted coaxially a rotatable disc 6. Rotatable discs 9 and 11 are arranged downstream from the disc 6 in this order. Rotatable shafts 10 are interposed between the discs 6, 9, between the discs 9, 11, and between the discs 11, 13. The discs 6, 9, 11 and rotatable shafts 10 form a kneading section K1. Downstream of the kneading section K1 is formed a venting section V including a rotatable disc 13 and an extruding section X including a screw 59 in this order.

Between the hollow cylinder 1 at a base portion and a hollow cylinder 30 at a forward end are provided annular members 14, 17, and 20 corresponding to the rotatable discs 6, 9, and 11, fixed doughnut members 16, 18, and 21 disposed between the discs 6, 9, 11, and 13, an annular member 22 having a vent hole 12, and a fixed doughnut member 28 disposed right downstream of the member 22 with respect to a direction of feed of material. These members are integrally joined between the hollow cylinders 1 and 30 in the above described order by a tie rod 24. On outer circumferential surfaces of the hollow cylinders 1, 30 are disposed heaters 5. In an upper portion of the inside of the hollow cylinder 1 is defined a groove 8 extending continuously in a shaft direction. An upstream end of the groove 8 is in communication with a vent hole 7 opening outwards as shown in Fig. 1.

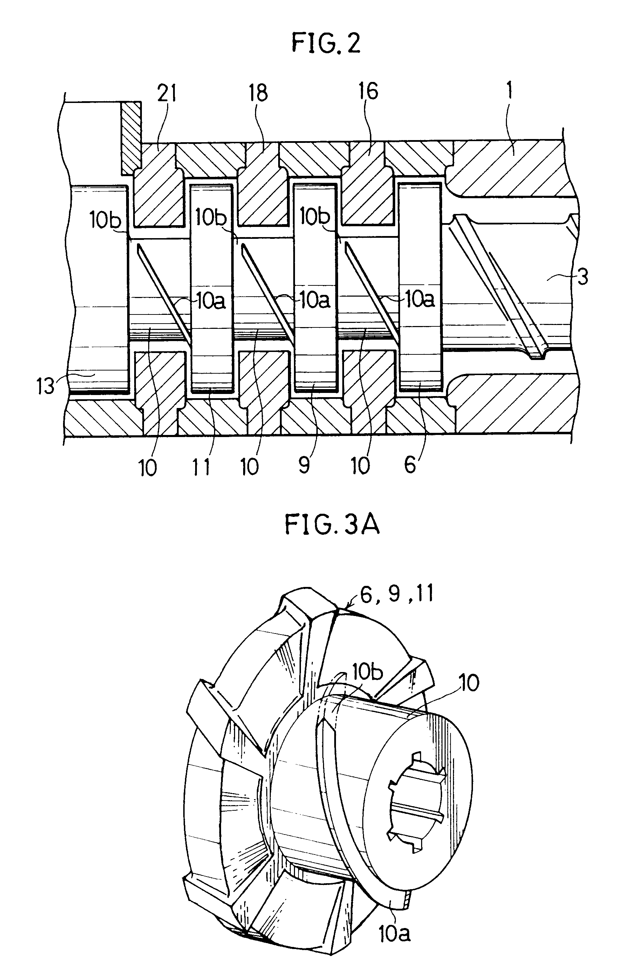

As shown in Fig. 3A, a plurality of projected portions are formed on opposite side faces of the rotatable discs 6, 9, and 11. On each of the side faces of the discs 6, 9, and 11, the projected portions are extending radially from its centers and equally and circumferentially spaced apart. Between two adjacent projected portions is formed a recessed portion. The recessed portion is formed such that the depth thereof become shallower at the center than at a radially outer portion of the rotatable disc. Outer radial ends of the projected portions project radially outwardly of the outer circumferential ends of the rotatable discs 6, 9, and 11, and extend helically in the shaft direction, thereby forming threads on the outer circumferential surfaces of the discs 6, 9, and 11. On inner circumferential surfaces of the annular members 14, 17, and 20 opposed to the outer circumferential surfaces of the rotatable discs 6, 9, and 11 are formed a plurality of grooves 23 extending in the shaft direction.

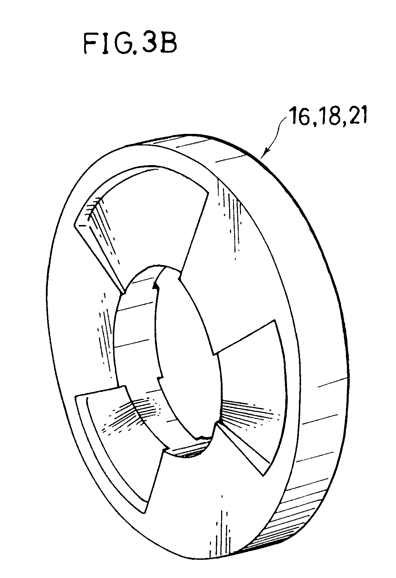

As shown in Fig. 3B, a plurality of recessed portions and projected portions are formed alternately on each of side faces of the fixed doughnut members 16, 18, and 21 opposed to the respective rotatable discs 6, 9, and 11, and are equally and circumferentially spaced apart. Specifically, one projected portion is formed between two adjacent recessed portions on each side face of the fixed doughnut members. Each of these recessed portions is formed such that the depth thereof become shallower at the center than at a radially outer portion of the fixed doughnut member. The projected portions formed on the respective rotatable discs extend radially outwards in a slightly tilted manner. Specifically, the projected portions formed on the side face of the rotatable discs facing an inlet side of the kneading apparatus extend in such a direction as to tilt relative to the radial directions thereof more in a direction of rotation at the radially outer portions. On the other hand, the projected portions formed on the side face of the rotatable discs facing an outlet side of the kneading apparatus extend in such a direction as to tilt relative to the radial directions thereof more in a direction opposite to the direction of rotation at the radially outer portions. With these rotatable discs thus formed, material fed into the kneading apparatus is fed through space between the screw 3 and hollow cylinder 1 and along the inlet-facing side face of the rotatable disc 6 in a radially outward direction. After passing over the outer circumferential surface of the rotatable disc 6, the material is further fed through space between the outlet-facing side face of the rotatable disc 6 and the fixed doughnut member 16 in a radially inward direction. The material is further fed between the rotatable discs 9, 11 and the fixed doughnut members 18, 21 in the similar manner. Opposite side faces of the rotatable disc 13 and fixed doughnut member 28 are formed similarly to those of other rotatable discs and fixed doughnut members.

The rotatable discs and fixed doughnut members may be arranged in such a manner that an area defined therebetween, i.e. a flow passage area of material, becomes smaller at a downstream portion of the kneading apparatus. To this end, the rotatable disc and fixed doughnut members may be formed with an increased number of the projected portions or shallower recessed portions at the downstream portion of the kneading apparatus. Further, it may be appropriate to set an optimum number of the rotational discs and fixed doughnut members to be arranged or to determine the optimum number and shape of projected portions and recessed portions formed thereon according to material to be kneaded and kneading conditions.

Further, as stated above, a plurality of grooves 23 extending in the shaft direction are formed on the inner circumferential surfaces of the annular members 14, 17, and 20. The annular members and rotatable discs are arranged such that the inner circumferential surfaces of the annular members are opposed to the outer circumferential surfaces of the rotatable discs. Accordingly, the projected portions and recessed portions formed on the circumferential surfaces of the annular members and rotatable discs are alternately opposed to each other similarly to the arrangement of the projected portions and recessed portions formed on the side faces of the rotatable discs and fixed doughnut members. The outer circumferential surface of the rotatable disc 13 and the inner circumferential surface of the annular member 22 are formed similarly to those of other rotatable discs and annular members.

As described above, the rotatable shafts 10 are arranged between the rotatable discs 6, 9, between the rotatable discs 9, 11, and between the rotatable discs 11, 13. A screw flight 10a in the form of a spiral is mounted on an outer surface of each rotatable shaft 10 as shown in Fig. 2, 3A, and 3B. The screw flights 10a is adapted for conveying the material present around the rotatable shafts 10 to the downstream side.

The screw flights 10a are each formed with a notch 10b at a downstream end thereof. Without the notches 10b, completely closed acute corner sections will be defined between the screw flights 10a and inlet-facing side faces of the rotatable discs following the respective screw flights 10a in the material feed direction. The completely closed acute corner sections tend to trap material being fed therein. However, in the present invention, the notches 10b serve as passages for conveying the material which would be otherwise trapped in the acute corner sections.

Operations of the kneading apparatus will be described hereafter. Firstly, the rotatable shaft 31 is rotated by the driving device 2 and the quantity measuring feeder 1a is actuated to feed material in the hopper 4 into the hollow cylinder 1 by a specified amount. Since the inside of the hollow cylinder 1 is heated by the heater 5, the material fed thereinto is conveyed toward the rotatable disc 6 while being dried. Gases produced during this time is discharged through the groove 8 and vent hole 7. The material reaching the rotatable disc 6 is fed through the space between the outer circumferential surface of the disc 6 and inner circumferential surface of the annular member 14, and then fed radially inwards by relative movement of the opposing side faces of the disc 6 and fixed doughnut member 16. The material is pressed by the screw flight 10a and fed to the more downstream side through the space between the inner circumferential surface of the fixed doughnut member 16 and an outer circumferential surface of the shaft 10, and further fed radially outwards through the space between opposing side faces of the rotatable disc 9 and fixed doughnut member 16. Thereafter, the material is subjected to the compressive action and shearing action while being fed between the rotatable discs and fixed doughnut members in the same manner.

When the material in the space between the outer surface of the shaft 10 and the inner circumferential surface of the fixed doughnut member 16 (or 18 or 21) reaches the inlet-facing side face of the rotatable disc 9 (or 11 or 13), it moves radially outwards without being trapped in the acute corner section. This is because the notch 10b is formed to define a passage for the material in the acute corner section as described above.

Accordingly, unlike the existing kneading apparatus, the material being fed is not trapped in the acute corner section to form an accumulated mass S therein in the kneading apparatus of the invention. This allows the material to move smoothly in the kneading apparatus. Further, there will be little likelihood that old material is mixed into material being fed since all the material is fed smoothly without forming the accumulated mass S in the acute section.

Although water or the like contained in the material is gasified during the kneading process, the produced gas is discharged through the vent hole 12 while passing through the outer circumferential portions of the rotatable disc 13. The material having the gas present therein completely extracted while passing through the disc 13 is fed through the extruding section X, and consequently extruded from a leading end portion of the extruding section X.

As described above, in a kneading apparatus according to the invention, a notch is formed at a downstream end of a screw flight which forms an acute corner portion with a rotatable disc following the screw flight. The notch serves as a passage for material having reached to the acute corner portion. Accordingly, unlike existing kneading apparatus, the material being fed is not trapped in the acute corner section to form such an accumulated mass as to block smooth movement of the material. Further, there will be little likelihood that old material is mixed into material being fed since all the material is fed smoothly without forming the accumulated mass S in the acute section. Thus, the invention is advantageous in smoothing operations of the kneading apparatus and stabilizing the quality of kneaded products.

## Claims

1. A kneading apparatus, comprising:
a hollow cylinder (1);
a rotatable shaft (31, 3, 10, 59) disposed in the hollow cylinder (1);
a screw flight (10a) helically mounted on the rotatable shaft (10) between two adjacent rotatable discs (6, 9, 11, 13) so as to convey material to a more downstream side;
said screw flight (10a) having a notch portion (10b) formed at the downstream end thereof, for defining a passage for the material.

2. A kneading apparatus as defined in claim 1, wherein
said plurality of rotatable discs (6, 9, 11, 13) is each mounted on the rotatable shaft (31, 3, 10, 59) and having projected portions and recessed portions formed on opposite side faces thereof, the projected portions and recessed portions extending radially and arranged alternately in a circumferential direction of the rotatable disc (6, 9, 11, 13) and further comprising:
a plurality of fixed members (16, 18, 21) in the form of a doughnut mounted on an inner wall of the hollow cylinder (1) coaxially with the rotatable discs (6, 9, 11, 13) and arranged alternately with the rotatable discs (6, 9, 11, 13) in the extending direction of the rotatable shaft (31, 3, 10, 59) so that side faces of the fixed members (16, 18, 21) are opposed to the corresponding side faces of the rotatable discs (6, 9, 11, 13), each fixed member (16, 18, 21) having projected portions and recessed portions formed on opposite side faces thereof, the projected portions and recessed portions extending radially and arranged alternately in a circumferential direction of the fixed member (16, 18, 21).

3. A kneading apparatus as defined in claim 1 or 2 wherein boundary lines formed on the one side faces of the rotatable discs (6, 9, 11, 13) extend tiltingly from the radial directions of the rotatable discs (6, 9, 11, 13) in a direction of rotation, and boundary lines formed on the other side faces of thereof extend tiltingly from the radial directions thereof in a direction reverse of the direction of rotation.

4. A kneading apparatus as defined in claim 1, 2 or 3 wherein a flow passage area of material is smaller at a downstream side portion than an upstream side portion.

## Patentansprüche

1. Knetvorrichtung, umfassend:
einen hohlen Zylinder (1);
eine drehbare Welle (31, 3, 10, 59), die in dem hohlen Zylinder (1) angeordnet ist;
einen Schneckenflügel (10a), der schraubenförmig auf der drehbaren Welle (10) zwischen zwei nebeneinanderliegenden drehbaren Scheiben (6, 9, 11, 13) montiert ist, um das Material auf eine weiter stromabwärts liegende Seite zu fördern;
wobei der Schneckenflügel (10a) einen Nutabschnitt (10b) besitzt, der an dessen stromabwärts liegendem Ende zum Bilden eines Durchganges für das Material ausgebildet ist.

2. Knetvorrichtung nach Anspruch 1, bei der
die Vielzahl von drehbaren Scheiben (6, 9, 11, 13) jeweils auf der drehbaren Welle (31, 3, 10, 59) montiert ist und hervorspringende Bereiche und vertiefte Bereiche besitzt, die auf deren gegenüberliegenden Seiten ausgebildet sind, wobei sich die hervorspringenden Bereiche und die vertieften Bereiche radial erstrecken und abwechselnd in einer Umfangsrichtung der drehbaren Scheibe (6, 9, 11, 13) angeordnet sind; und die ferner umfaßt:
eine Vielzahl von feststehenden Gliedern (16, 18, 21) in der Form einer Ringröhre, die auf der inneren Wand des hohlen Zylinders (1) koaxial zu den drehbaren Scheiben (6, 9, 11, 13) montiert sind und abwechselnd mit den drehbaren Scheiben (6, 9, 11, 13) in der Ausdehnungsrichtung der drehbaren Welle (31, 3, 10, 59) angeordnet sind, so daß die Seitenflächen der feststehenden Glieder (16, 18, 21) gegenüber den korrespondierenden Seitenflächen der drehbaren Scheiben (6, 9, 11, 13) liegen, wobei jedes feststehende Glied (16, 18, 21) hervorspringende Bereiche und vertiefte Bereiche besitzt, die auf dessen gegenüberliegenden Seiten ausgebildet sind, und sich die hervorspringenden Bereiche und die vertieften Bereiche radial erstrecken und abwechselnd in einer Umfangsrichtung des feststehenden Gliedes (16, 18, 21) angeordnet sind.

3. Knetvorrichtung nach Anspruch 1 oder 2, bei der sich Begrenzungslinien, die auf den einen Seitenflächen der drehbaren Scheiben (6, 9, 11, 13) ausgebildet sind, von den radialen Richtungen der drehbaren Scheiben (6, 9, 11, 13) in eine Drehrichtung neigend erstrecken, und sich Begrenzungslinien, die auf deren anderen Seitenflächen gebildet sind, von deren radialen Richtungen in eine Richtung entgegen der Drehrichtung neigend erstrecken.

4. Knetvorrichtung nach Anspruch 1, 2 oder 3, bei der eine Durchflußfläche für das Material kleiner an einem stromabwärts liegenden Seitenabschnitt als an einem stromaufwärts liegenden Seitenabschnitt ist.

## Revendications

1. Appareil de pétrissage comprenant:
un cylindre creux (1);
un arbre rotatif (31, 3, 10, 59) placé dans le cylindre creux (1);
un filet d'écrou (10a) monté hélicoïdalement sur l'arbre rotatif (10) entre deux disques rotatifs adjacents de manière à déplacer la matière du côté qui est plus en aval;
ledit filet d'écrou (10a) qui comporte une partie encoche (10b) formée à son extrémité d'aval, pour définir un passage destiné à la matière.

2. Appareil de pétrissage selon la revendication 1, où
lesdits plusieurs disques rotatifs (6, 9, 11, 13) sont tous montés sur l'arbre rotatif (31, 3, 10, 59) et comportent des parties en saillie et des partie en creux formées sur leurs faces latérales opposées, les parties en saillie et les parties en creux s'étendant radialement et étant disposées alternativement en direction de la périphérie du disque rotatif (6, 9, 11, 13) et comprenant en outre:
plusieurs éléments fixes (16, 18, 21) de forme torique montés sur une paroi intérieure du cylindre creux (1) coaxialement avec les disques rotatifs (6, 9, 11, 13) et disposés alternativement avec les disques rotatifs (6, 9, 11, 13) dans la direction d'extension de l'arbre rotatif (31, 3, 10, 59) en sorte que les faces latérales des éléments fixes (16, 18, 21) sont opposées aux faces latérales correspondantes des disques rotatifs (6, 9, 11, 13), chaque élément fixe (16, 18, 21) comportant des parties en saillie et des parties en creux formées sur ses faces latérales opposées, les parties en saillie et les parties en creux s'étendant radialement et étant disposées alternativement en direction de la périphérie de l'élément fixe (16, 18, 21).

3. Appareil de pétrissage selon la revendication 1 ou 2, où les lignes de contour formées sur la première face latérale des disques rotatifs (6, 9, 11, 13) s'étendent, de manière inclinée, à partir des directions radiales des disques rotatifs (6, 9, 11, 13) dans le sens de rotation, les lignes de contour formées sur l'autre face latérale de ceux-ci s'étendent, de manière inclinées, à partir de leurs directions radiales dans le sens inverse au sens de rotation.

4. Appareil de pétrissage selon la revendication 1, 2 ou 3, où une aire de passage de l'écoulement de la matière, qui se trouve à une partie latérale en aval, est inférieure à celle qui se trouve à une partie latérale en amont.
